Europäisches Patentamt

European Patent Office

Office européen des brevets

(11) Publication number: **0 157 717**
**B1**

(12) EUROPEAN PATENT SPECIFICATION

(45) Date of publication of patent specification: **13.06.90**

(21) Application number: **85630022.3**

(22) Date of filing: **26.02.85**

(51) Int. Cl.⁵: **C 08 J 7/04,** C 08 J 7/12, C 08 J 5/12

(54) Polyurethane bonded to cured rubber.

(30) Priority: **07.03.84 US 587106**

(43) Date of publication of application:
**09.10.85 Bulletin 85/41**

(45) Publication of the grant of the patent:
**13.06.90 Bulletin 90/24**

(84) Designated Contracting States:
**DE FR GB IT**

(56) References cited:
**FR-A-2 210 508**
**GB-A-1 453 973**
**US-A-3 813 257**
**US-A-4 327 138**

(73) Proprietor: **THE GOODYEAR TIRE & RUBBER COMPANY**
**1144 East Market Street**
**Akron, Ohio 44316-0001 (US)**

(72) Inventor: **Krishnan, Ram Murthy**
**4526 Forest Hill Road**
**Stow, OH 44224 (US)**

(74) Representative: **Weyland, J.J. Pierre**
**Goodyear Technical Center-Luxembourg**
**L-7750 Colmar-Berg (LU)**

Courier Press, Leamington Spa, England.

**Description**

Field

This invention relates to a method of preparing a composite of polyurethane bonded to cured rubber through an adhesive interface. The invention further relates to such prepared composite. The invention particularly relates to a method of preparing a composite of tire comprised of a polyurethane tire carcass bonded to a cured rubber tread. The invention further relates to a composite of a tire comprised of a polyurethane tread bonded to a cured rubber tire carcass. Such a method and a composite is for example described in prior art document US—A—4 327 138.

Background

It is sometimes desired to prepare composites of polyurethanes bonded to cured rubber for various purposes, particularly where it is desired to obtain the advantages of the properties each or both of such materials in an individual application.

For example, it may be desired to provide a vehicular tire with a rubber carcass having an outer circumferential tread of polyurethane.

It may also be desired to provide a vehicular tire with a cured rubber tread and a polyurethane carcass.

Additionally, other products, including various industrial products may be desired as laminates of cured rubber and polyurethane.

However, particularly for such composites which are normally expected to experience a considerable amount of flexing, compression and various degrees of distortion during their use, an important point of early failure can be the interface between the cured rubber substrate and the polyurethane.

Although the relationship between the two types of materials is complex and depends upon many factors, it is important to appreciate that effectively adhering a relatively polar polyurethane substance to the surface of a relatively non-polar cured rubber substrate can be difficult.

Various adhesive systems have been tried and sometimes suggested for such purpose. However, for many applications, the resulting bond strengths are simply insufficient to provide an effective composite laminate which will not easily delaminate under extensive working conditions.

Therefore, it is an aspect of this invention to provide a composite of a polyurethane bonded to the surface of a cured rubber substrate.

Summary and Operation

In accordance with this invention, a method of preparing a composite of a polyurethane bonded to a surface of a cured rubber substrate comprises the steps of

(A) cleaning a surface of a cured rubber substrate where said rubber contains 0 to 25, preferably 0 to 20 and optionally 5 to 20, phr of rubber processing oil.

(B) Appyling at least one coating to said cleaned substrate surface as a dispersion of cyanuric acid in a volatile organic diluent and drying the resultant coat to remove said diluent.

(C) Applying at least one additional overcoat to the said cyanuric acid coat as a solution comprising a phenol formaldehyde resole resin in a volatile organic solvent and drying the resultant additional overcoat to remove the solvent.

(D) Applying a liquid polyurethane reaction mixture to said coated substrate surface.

(E) Curing said reaction mixture to form a composite of polyurethane bonded to cured rubber substrate through said sequentially applied coatings.

In further accordance with this invention, a composite is provided comprised of polyurethane bonded to a cured rubber substrate prepared by such method.

It is important to appreciate that the cured rubber substrate also contains conventional rubber compounding ingredients including carbon black, zinc oxide, a stearate such as zinc stearate, sulfur and antidegradants.

In further accordance with this invention, a composite is provided comprised of polyurethane bonded to a cured rubber substrate prepared by such method.

It is important that the surface of the cured rubber substrate is cleaned prior to application of the cyanuric acid solution in order to remove surface oils and other foreign substances which may be present. The purpose is to provide a fresh, exposed rubber surface substantially free from typical surface oils and other contaminants.

The cleaning of the cured rubber surface can be done by various means such as by organic solvent, aqueous soap solution washing, abrading or a combination thereof. If the organic solvent or aqueous soap solution method is used, the treated surface is dried before application of the cyanuric acid solution. Abrading of the rubber surface can be accomplished by various means such as by buffing with wire wheel, abrasive grinding wheel or shot blast treatment to abrade away a part of the surface to leave it both clean and roughened. A roughened rubber surface apparently tends to aid in improving adhesion in the practice of this invention.

In practice, usually the surface is first abraded, such as by buffing, and then washed with an organic solvent. Typically such solvents might be, for example, methylene chloride or methyl ethyl ketone. All of these are well-known methods of cleaning cured rubber surfaces to those having skill in such art.

A particular application of this invention is the preparation of a tire having a polyurethane carcass applied to a cured rubber tread. For such tire, the rubber tread is first pre-formed and cured as a circular element which is intended to become a peripheral, circumferential portion of the tire.

For such application, a composite in the form of a tire is prepared by the steps of

(A) Obtaining a cured rubber tire tread composed of an outer rubber tread portion and an inner, exposed rubber portion, where said inner rubber portion contains 0 to 25, preferably 0 to 20 and optionally 5 to 20, phr of rubber processing oil.

(B) Cleaning the inner surface of said inner tread portion.

(C) Applying at least one coating to said cleaned inner tread surface of a dispersion of cyanuric acid in a volatile organic diluent and drying the resultant coat.

(D) Applying at least one additional coating to said coated surface as a solution comprising a phenol formaldehyde resole resin in a volatile organic solvent and drying the resultant coat.

(E) Applying a liquid polyurethane reaction mixture to said coated surface in a molding environment having the shape of a desired tire carcass.

(F) Curing said reaction mixture in said molding environment to form said composite as a polyurethane tire carcass bonded to a cured rubber tread through said sequentially applied coatings.

In further accordance with this invention, a tire is provided which comprises a polyurethane tread bonded to a cured rubber carcass prepared according to such method.

In the practice of this invention it is preferred that the said inner rubber portion of the tread is fabric reinforced with a textile woven fabric imbedded therein such as, for example, a tire cord fabric. Such fabric can be of various filaments and/or yarns such as, for example, polyester, nylon, aramid, glass and metal such as steel. A primary purpose of such reinforcement is to restrict growth in diameter of the tread during its use as a component of the resultant tire composite and to generally add strength to the tread structure.

An additional application of this invention is the preparation of a composite as a tire having a polyurethane tread applied circumferentially to the periphery of a cured rubber tire carcass.

For such application, a composite in the form of a tire is prepared by the steps of

(A) Obtaining a toroidally shaped cured rubber tire carcass, said carcass having a circumferential, outer, exposed rubber portion containing 0 to 25, preferably 0 to 20 and optionally 5 to 20 phr of rubber processing oil.

(B) Cleaning the said outer, exposed surface of the outer rubber portion of said carcass.

(C) Applying at least one coating to said cleaned outer carcass surface as a dispersion of cyanuric acid in a volatile organic diluent and drying the resultant coat.

(D) Applying at least one additional coating to said coated surface as a solution comprising a phenol formaldehyde resole resin in a volatile organic solvent and drying the resultant coat.

(E) Applying a liquid polyurethane reaction mixture to said coated surface of the carcass in a molding environment having the shape of a desired tire tread.

(F) Curing said reaction mixture in said molding environment to form said composite as a polyurethane tread bonded to a cured rubber tire carcass through said sequentially applied coats.

In practice, it may often be desired that the edges of the tread extend over a portion of the sidewall of the carcass adjacent to the tread.

In further accordance with this invention, a tire is provided which comprises a polyurethane carcass bonded to a cured rubber tread prepared according to such method.

The cured rubber substrate is described as being required to contain 0 to 25, preferably 0 to 20 and optionally 5 to 20 phr of rubber processing oil. Many, and indeed most, cured rubber formulations contain a rubber processing oil and this amount of oil is not considered as being particularly unusual, although some compounds may contain more oil. The more specific oil limitation is placed on the rubber substrate to which the coatings are applied because in the practice of this invention, it has been observed that a better bond is obtained if the amount of oil in the rubber is somewhat limited. The optional range of 5—20 phr of oil is provided where as often may be the case, a level or minimum amount of oil may be desired or required in the rubber for various physical property purposes.

The practice of this invention is described as being particularly applicable to the preparation of tires. Such tires are described as being constructed of an outer circumferential tread and a carcass. As will be readily known and observed by one having skill in the tire art, the outer portion of the tread is adapted to be surface contacting such as for example, ground contacting, its inner portion faces and joins the carcass which provides support for the tread. The carcass can be composed of various elements and can contain reinforcement such as a fabric reinforcement.

The tire carcass is referred as being generally toroidal shaped which is the conventional shape of a tire and is intended to include the typical open toroid tire carcass configuration.

In the practice of this invention, the cyanuric acid is applied to the cleaned cured rubber substrate as a dispersion in an organic diluent. It is to be understood that a portion of the cyanuric acid may, dissolve in the diluent and thus form a solution. The term "dispersion" is intended to describe the dispersion of the cyanuric acid in the diluent which may also contain and include the cyanuric acid in the form of a solution. For this purpose, various organic diluents can be used, although it is preferred as a limitation, that such solvents do not unnecessarily or excessively damage the cured rubber surface. Thus, materials such as dimethyl sulfoxide, dimethylformamide and tetrahydrofuran are generally not desired. The cyanuric acid itself is relatively insoluble in most diluents or solvents so that it is usually applied as a dispersion in an organic diluent such as, for example, ethyl acetate.

The cyanuric acid dispersion and/or solution can be applied to the cured rubber surface at ambient conditions, although it is sometimes preferred that the cured rubber surface has a temperature in the range of 50°C to 95°C in order to increase the rate of evaporation of the diluent of solvent.

Although one coat of the cyanuric acid solution can be applied, because each application typically results in a very thin coating, it is usually desired that from 1 to 5, more preferably from 2 to 4 coatings are applied for the purpose of providing good coverage of the rubber surface.

In practice, it is preferred that each individual cyanuric acid coat is dried before applying another coat. It is believed that the effective, ultimate resultant adhesive bond will be enhanced by such procedure.

It is considered that it is desirable to dry the cyanuric acid coating before applying the additional coat of resin because it is considered that a better bond can be obtained by elimination of residual solvent.

Typically, a coating of up to about 0.007 gms of acid have been deposited per square centimeter of cured rubber surface. The amount deposited is not considered particularly critical except that it is to be emphasized that the coating is thin yet adequately covers the rubber surface.

The acid coating can be dried at room temperature such as 20°C to 30°c although it may sometimes be more desirable to dry the coating at a temperature of 75°C to 100°C in a hot air oven in order to reduce the drying time.

The additional coating applied over the cyanuric acid coat is comprised of the phenol formaldehyde resole resin is applied as an organic solvent thereof. Various solvents can be used for this purpose which do not unnecessarily excessively damage the rubber as hereinbefore pointed out.

Although one coat of the resin can be used, because an individual coat is very thin, usually about 1 to 5 and preferably from 2 to 4 coats are preferred in order to adequately cover the cyanuric acid coat.

In practice, it is preferred that each individual resin coat is dried before applying another coat. It is believed that such practice enhances the resultant adhesive bonding effect.

Suitable solvents, or mixtures thereof, for the resin solution may be selected from, for example, liquid ketones such as acetone, methyl ethyl ketone, methyl isobutyl ketone as well as trichloroethylene, toluene, ethyl alcohol, and isopropanol and mixtures of such solvents.

Generally, the resin solution is applied as a concentration in the range of 5 to 20, preferably 5 to 15 weight percent solids.

The resin solution can be applied at about ambient conditions, such as 20°C to 30°C, although it is preferred that the rubber surface temperature is 50°C to 95°C to shorten the drying time.

The phenol formaldehyde resole resin is familiar to those having skill in such art and refers to the resultant products of at least partially condensing formaldehyde and a phenol alcohol, particularly phenol. Phenol formaldehyde resin is considered as being a major constituent in the solids portion of the solution where the remainder of the solids may be composed of minor amounts of other resins and polymers.

It was observed that it was important to dry the applied resin coating prior to application of the polyurethane reaction mixture in order to obtain better bonding.

The polyurethane reaction mixture is applied as a liquid under molding environment conditions to the coated, cured rubber surface. It is preferred that the coated rubber surface is 30°C to 80°C. The reaction mixture is liquid primarily because the reactants are chosen so that the mixture is in a liquid form.

By the term molding environment conditions, it is meant that the liquid mixture is applied within a containment that has a shape suitable for the desired article to be obtained upon curing the liquid mixture to form a solid material such as a tire carcass, tire tread or other desired article such as an industrial product. In the molding environment it is contemplated that it may often be desirable to first place the cured rubber substrate such as cured rubber carcass or cured rubber tread into a suitable mold to which is then applied the liquid reaction mixture.

The liquid reaction mixture is then cured at a suitable temperature such as room or ambient temperature (20°C to 30°C), or at a temperature in the range of 20°C to 130°C, although preferably it is cured at a temperature in the range of 80°C to 120°C.

It is important to appreciate that the polyurethane is cured against the resin topcoat over the cyanuric acid coated cured rubber substrate to achieve the bonding effect.

Although the bonding mechanism in which the polyurethane is bonded to the cured rubber surface through the applied coatings is not fully understood, it has been observed that no satisfactory bond of sufficient strength was attained by simply applying either of the coatings alone or by simply using what is understood to be somewhat conventional technique of chlorine water treating the cured rubber surface. It was only with the combination of both the sequentially applied coatings was a bond obtained which was observed to be satisfactorily effective at elevated temperatures.

The degree of effective bonding was tested by a laboratory procedure. In such procedure, test samples as laminates of layers of 6" × 1" (15 cm × 2.5 cm) polyurethane ($\frac{1}{2}$" or 1.3 cm thick) and cured rubber ($\frac{1}{8}$" to $\frac{1}{4}$" 0.3 cm to 0.6 cm thick) are bonded through the sequentially applied coatings according to the method of this invention. The samples are tested at a series of temperatures, including 25°C and 66°C, by a 180° peel test in which the layers of polyurethane and cured rubber are pulled apart with an Instron tester at a crosshead speed of 5.1 cm (2 inches) per minute and the force needed to pull them apart is measured and

4

observed as pounds of force for the 2.54 cm (one inch) wide sample and expressed as pounds per inch (lb/in) and (kN/m).

In accordance with the practice of this invention, such laminates of polyurethane to cured rubber are provided having a bond strength in the range of 7 kN/m to at least 10.5 kN/m (40 lb/in to at least 60 lb/in) at 25°C and in the range of 2.6 kN/m to at least 4.4 kN/m (15 lb/in to at least about 25 lb/in) at about 65°C according to this test, depending somewhat upon the nature of the rubber and polyurethane and characteristics of the interfacing coatings.

In the practice of this invention, the said cured rubber substrate surface to which the sequential coats are applied and the polyurethane adhered can for example, be of various cured rubbers such as for example those comprised of at least one of natural rubber, synthetic cis 1,4-polyisoprene, cis 1,4-polybutadiene, styrene/butadiene copolymer, butyl, chlorobutyl bromobutyl and EPDM rubber it is to be understood that such rubbers are compounded with typical rubber compounding ingredients which conventionally include carbon black, zinc oxide, stearate, sulfur, accelerator(s) and 0 to 25, preferably 0 to 20 and optionally 5 to 20 phr (parts by weight per 100 parts by weight rubber) rubber processing oil. Other ingredients might be used such as various antidegradants, pigments and conventional other compounding ingredients. It is generally desired that only a minimal of oil, if any, be contained in the cured rubber in order that a better bond can be obtained.

In the practice of this invention the said polyurethane reaction mixture is prepared according to methods known to those having skill in the polyurethane art. Various polyurethane reaction mixture recipes can be used, depending somewhat upon the cured polyurethane properties desired.

For example, a polyurethane reaction mixture may be comprised of (i) a prepolymer of at least one polyisocyanate having an average NCO content of 2.1 to 2.5 and a polymeric polyol selected from at least one of polyester polyol, polyether polyol and polybutadiene polyol having an average hydroxyl functionality of 2 to 3 and a molecular weight in the range of 2000 to 4000 where the NCO/OH ratio is in the range of 1.5 to 2.5 and (ii) a curative for said prepolymer selected from at least one diamine, preferably a primary diamine such as, for example, methylene dianiline, a sodium chloride complex with 4,4'-methylene dianiline in dioctylphthalate, diethyl 2,4-diamine, trimethylene glycol di-para-amino benzoate and meta phenylene diamine or a monomeric diol such as, for example, ethylene glycol, 1,3-propane diol, 1,4-butane diol, hydroxy ethyl hydroquinone, and trimethylolpropane. A polycaprolactone derived from caprolactone and a small amount of diglycidal ether has been found to be a particularly useful polyester polyol.

The ratio of primary amine groups of the diamine or hydroxyl groups of the monomeric diol to the excess of NCO groups over the OH groups of the prepolymer is typically in the range of 0.75/1 to 0.95/1.

Representative examples of various diisocynates may include for example 1,6-hexamethylene diisocyanate, 1,10-decamethylene diisocyanate, 1,4-cyclohexylene diisocyanate, 4,4'-methylene-bis(cyclohexylisocyanate), 1,5-tetrahydronaphthalene diisocyanate, isophorone diisocyanate, the 1,4- and 2,6-toluene diisocyanates, m-phenylene diisocyanate, diphenylmethane-4,4'-diisocyanate, hydrogenated diphenylmethane-4,4'- diisocyanate, and 3,3'-dimentyl-4,4-bis phenylene diisocyanate, as well as the polyalkylene-polyarylene isocyanates as more particularly referred to in U.S. Pat. No. 2,683,730.

If desired, the polyurethane may be loaded with various fillers to enhance its physical properties. Thus, the cured polyurethane may contain from 5 to 100 weight percent of typical particular rubber reinforcing fillers, such as carbon black, titanium dioxide, zinc oxide, calcium carbonate, filler clays, silicas and coloring pigments.

The tires can be pneumatic when using an internal air pressure for support of the tire structure, semi-pneumatic when using internal air for a partial support although relying primarily on the tire's own structure for support or the tire can be solid such as for industrial tire application.

The practice of this invention is further illustrated by reference to the following examples. Unless otherwise indicated, all parts and percentages are by weight.

## Example I

A circular cured rubber tire tread having a width of 5 to 6 inches (12 to 15 cm), a thickness of about 0.5 inch (1.3 cm) in its crown region and tapering to a point of no thickness in its shoulder regions and with an outside diameter of about 13 inches (33 cm) was prepared having an outer tread rubber portion, or layer, for ground contacting purposes and an integral, internally fabric reinforced inner rubber layer with an exposed inner surface.

The inner rubber layer was composed of a mixture of natural rubber, styrene/butadiene rubber, about 17.25 phr rubber processing oil and conventional compounding ingredients including carbon black, sulfur, zinc oxide, zinc stearate, resin(s), antidegradant(s) and accelerator(s).

The inner, exposed surface of the said inner portion or layer of the cured rubber tread was cleaned by first buffing to roughen and abrade away a small portion of the layer followed by washing the abraded surface with methyl ethyl ketone and drying the cleaned rubber surface.

The cured rubber tread was heated to about 95°C.

To the cleaned and heated inner cured rubber tread surface was first applied two coats of dispersion of cyanuric acid as a 3 percent solids in ethyl acetate obtained as Chemlok 7701® from Hughson Chemicals of the Lord Corporation.

Each of the cyanuric acid coats was individually allowed to dry to remove the ethyl acetate solvent on the warm tread surface for about 10 minutes between each application.

To the dried cyanuric acid resultant coating was then applied a coating of a solution primarily composed of a phenol formaldehyde resole resin, at a concentration of about 10 percent solids, in a mixture of solvents understood to be toluene, methyl isobutyl ketone and trichloroethylene isopropanol and ethyl alcohol to which methyl ethyl ketone was added.

The phenol formaldehyde resin solution was obtained as Chemlok 218® which is described as being composed of the phenol formaldehyde resin and organic resins and polymers dissolved in an organic blend of solvents from Hughson Chemicals of the Lord Corporation.

The coated rubber tread after standing at room temperature (23°C—25°C) for about 30 minutes, was placed in a hot air oven for about 10 minutes at about 95°C after which it was removed and placed in a 13 inch (33 cm) diameter tire mold (molding environment).

A liquid polyurethane reaction system was cast onto the warm, coated inner surface of the cured rubber tread in the molding environment and cured at a temperature at about 125°C at about 16 hours in a hot air oven. The liquid polyurethane reaction mixture was prepared by mixing a prepolymer with a curative according to the following recipe shown in Table 1 wherein the prepolymer had an NCO/OH ratio of about 2/1 and a free NCO content of about 2.3%. For the curative, a ratio of NH$_2$/free NCO of about 0.95/1 was provided.

<u>Table 1</u>

| Material | Parts |
|---|---|
| **A. Prepolymer** | |
| Polycaprolactone[1] Polyol | 100 |
| Diphenyl Methane Diisocyanate | 16.32 |
| | |
| **B. Curative** | |
| Diamine[2] | 13.16 |

[1] A polyester polyol derived from -caprolactone and diglycidal ether and having a molecular weight of about 3000.

[2] Obtained as a 50% 4,4'methylenedianiline/sodium chloride complex in dioctyl phthalate.

Example II

A tubeless, pneumatic tire of size BR78—13, composed of a cured polyurethane carcass bonded to an outer, circumferential cured rubber tread through the surface coating by the method of this invention was prepared according to the method of Example I and tested. The rubber tread of the tire contained a glass filament belt reinforcement. The polyurethane carcass contained no reinforcement elements except for its beads.

For the test, the tire was mounted on a steel rim, inflated to a pressure of 24 psig (0.17 Mpa), stored overnight after which the pressure was readjusted to 24 psig. The tire was then tested by being allowed to rotate under load against a 36 inch (91 cm) diameter motor-driven dynamometer drum. The tire was rotated at a peripheral speed of about 50 miles per hour (mph) (90 kph) under a sequential step-load procedure in which an initial load of about 481 pounds (218 kg) load was applied after which the load was periodically increased. The results of the test are shown in the following Table 2.

## Table 2

| Time (hrs) | Percent Of Rated Tire Load | Load lbs | (kg) |
|---|---|---|---|
| 4 | 50 | 481 | (218) |
| 6 | 100 | 609 | (276) |
| 6 | 109 | 795 | (361) |
| 24 | 117 | 923 | (419) |
| 8 | 130 | 1147 | (521) |
| 8 | 145 | 1168 | (530) |
| 8 | 160 | 1280 | (581) |
| 4.1. | 175 | 1403 | (637) |
| Total 68.1 | | | |

Results:

At about 84 minutes into the 175% load increment, a crack appeared in the rubber tread at the shoulder region indicating a break within the rubber tread and not at the rubber/polyurethane interface.

Finally, at about 246 minutes (4.1 hours) into the 175% load increment, the tire was not able to maintain its inflation pressure of $165 \times 10^3$ Pa (24 psig) apparently because of propagation of the break, and the test was discontinued.

### Example III

A tubeless, pneumatic tire of size BR78—13, composed of a cured polyurethane carcass bonded to an outer, circumferential cured rubber tread through the surface coating by the method of this invention was prepared according to the method of Example I and tested. The rubber tread of the tire contained a glass filament belt reinforcement. The polyurethane carcass contained no reinforcement elements except for its beads.

The tire was submitted to a combination of constant speed-step load endurance test followed by a high speed constant load endurance test. For the test, the tire was mounted on a rim, inflated to a pressure of $165 \times 10^3$ Pa (24 psig) stored overnight after which the pressure was re-adjusted to $165 \times 10^3$ Pa (24 psig). The tire was then tested by being allowed to rotate against a 91 cm (36 inch) diameter motor driven dynamometer drum a peripheral speed of 81 kilometers per hour (km/hr) (50 mph) with stepped loads, then the test stopped, the load re-adjusted to 100% rated load, and the tire run at incrementally stepped up peripheral speeds.

The results of the test are shown in the following Tables 3A and 3B:

## Table 3A

### Constant Speed-Step Load Endurance Test

| Time (hrs) | Speed (mph) | km/h | Percent of Rated Tire Load | Load (lbs) | kg |
|---|---|---|---|---|---|
| 4 | (50) | 80 | 50 | (480) | 218 |
| 6 | (50) | 80 | 100 | (721) | 327 |
| 6 | (50) | 80 | 109 | (806) | 366 |
| 24 | (50) | 80 | 117 | (960) | 436 |

## Table 3B

### Constant Load-Stepped Up Speed Endurance Test

| Time (hrs) | Speed mph | (km/h) | Percent of Rated Tire Load | Load lbs | (kg) |
|---|---|---|---|---|---|
| 4 | 60 | (97) | 100 | 721 | (327) |
| 2 | 85 | (137) | 100 | 721 | (327) |
| 2 | 90 | (145) | 100 | 721 | (327) |
| 2 | 95 | (153) | 100 | 721 | (327) |
| 2 | 100 | (161) | 100 | 721 | (327) |

Results:

The test was discontinued after the 100 mph increment of the high speed (stepped-up speed) endurance test with a running time after no apparent defects or signs of deterioration of the tire were evident after completion of the fourth step load (100 mph).

Example IV
Cleated Wheel Test

A tubeless, pneumatic tire of size BR78—13, composed of a cured polyurethane carcass bonded to an outer, circumferential cured rubber tread through the surface coating by the method of this invention was prepared according to the method of Example I and tested. The rubber tread of the tire contained a glass filament belt reinforcement. The polyurethane carcass contained no reinforcement elements except for its beads.

For the test, the tire was mounted on a steel rim, inflated to a pressure of $234 \times 10^3$ Pa (34 psig) and allowed to rotate under a load of 1030 pounds (468 kg) at a peripheral speed of 45 mph (72 km/h) against a 0.914 m (36 inch) diameter motor driven dynamometer drum upon which 6 cleats had been affixed. The cleats extended across the drum and had a cross-section approximating a semi-circle having about a 1 inch (2.54 cm) radius. The cleats actually had a height of about 3/4 inch (1.9 cm). The cleats were spaced apart around the drum with 2 cleats being positioned across the drum at right angles to the tire (parallel to the tire's axle), 2 cleats positioned at a 45° angle to the tire and 2 cleats positioned at a 45° angle to the tire in a direction opposite to the 2 other angled cleats.

After running the test for 5.9 hours, a crack appeared in the radial edge of the outside tread groove indicating a separation in the rubber portion of the tire. No evidence of failure was observed in the rubber/ polyurethane bonded innerface.

The cleated wheel test is considered to be a severe tire test.

Example V

A composite of polyurethane bonded to a cured rubber substrate prepared by the method used in Example 1 for preparing the tire, including the representative formulations was tested according to the procedure hereinbefore described in this specification for bond strength at a series of temperatures of which 23°C and 65°C are representative.

The bond strength between the cured rubber and cured polyurethane through the sequentially applied coatings was observed as being about 48 pounds per inch (lb/in) (8.4 kn/m) at about 23°C and about 20 (lb/ in) (3.5 kn/m) at about 65°C. These bond strengths are considered especially exceptionally good as compared to the use of cyanuric acid and phenol-formaldehyde resole resin coatings alone in place of the sequentially applied coatings for adhering the polyurethane to the cured rubber substrate as shown in the following Table 4.

## Table 4

| Bonding Interface | [1]Maximum Bond Strength (lb/in) | |
|---|---|---|
| | 23°C | 65°C |
| A. Sequentially applied cyanuric acid and phenol-formaldehyde resole resin coatings according to the invention | 48 | 20 |
| B. Only cyanuric acid coating | 62 | 3.4 |
| C. Only phenol-formaldehyde resole resin coating | 1.3 | 2.4 |

[1]Between the polyurethane and cured rubber substrate through the applied coatings.

**Claims**

1. A method of preparing a composite of a polyurethane bonded to a surface of a cured rubber substrate characterized by comprising the steps of
   (A) Cleaning a surface of a cured rubber substrate where said rubber contains 0 to 25 phr of rubber processing oil;
   (B) Applying at least one coating to said cleaned substrate surface as a dispersion of cyanuric acid in a volatile organic diluent and drying the resultant coat to remove said diluent;
   (C) Applying at least one additional overcoat to the said cyanuric acid coat as a solution comprising a phenol formaldehyde resole resin in a volatile organic solvent and drying the resultant additional overcoat to remove the solvent;
   (D) Applying a liquid polyurethane reaction mixture to said coated substrate surface;
   (E) Curing said reaction mixture a composite of polyurethane bonded to cured rubber through said sequentially applied coatings.

2. A method of preparing a composite in the form of a tire characterized by comprising the steps of
   (A) Obtaining a circular cured rubber tire tread composed of an inner rubber portion having an exposed inner tread surface, where said inner rubber portion contains 0 to 25 phr of rubber processing oil;.
   (B) Cleaning the exposed inner surface of said inner tread portion;
   (C) Applying at least one coating to said cleaned inner tread surface of a dispersion of cyanuric acid in a volatile organic diluent and drying the resultant coat;
   (D) Applying at least one additional overcoat to said cyanuric acid coat as a solution comprising a phenol formaldehyde resole resin in a volatile organic solvent and drying the resultant coat;
   (E) Applying a liquid polyurethane reaction mixture to said coated surface in a molding environment having the shape of a desired tire carcass;
   (F) Curing said reaction mixture in said molding environment to form said composite as a polyurethane tire carcass bonded to a cured rubber tread through said sequentially applied coatings.

3. A method of preparing a composite in the form of a tire characterized by comprising the steps of
   (A) Obtaining a toroidally shaped cured rubber tire carcass, said carcass having a circumferential, outer, exposed rubber portion containing 0 to 25 phr of rubber processing oil;
   (B) Cleaning the outer, exposed surface of the said outer rubber portion of said carcass;
   (C) Applying at least one coating to said cleaned outer carcass surface as a dispersion of cyanuric acid in a volatile organic diluent and drying the resultant coat;
   (D) Applying at least one additional overcoat to said coated surface as a solution comprising a phenol formaldehyde resole resin in an organic solvent and drying each individual coat;
   (E) Applying a liquid polyurethane reaction mixture to said coated surface of the carcass in a molding environment having the shape of a desired tire tread;
   (F) Curing said reaction mixture in said molding environment to form said composite as a polyurethane tread bonded to a cured rubber tire carcass through said sequentially applied coatings.

4. The method according to claim 2 or 3 characterized in that the cured rubber surface is heated to a temperature in the range of 50°C to 95°C prior to application of the cyanuric acid dispersion and phenol formaldehyde resole resin solution, where each of said dispersion and said solution are applied an amount of 2 to 5 coatings and where each dispersion and each solution individual coat is dried prior to application of an additional coating.

5. The method according to claim 2 or 3 characterized in that the cured rubber substrate surface is a cured rubber comprised of at least one of natural rubber, synthetic cis 1,4-polyisoprene, cis 1,4-polybutadiene, styrene/butadiene copolymer, butyl rubber, chlorobutyl rubber, bromobutyl rubber and EPDM rubber containing carbon black, zinc oxide, stearate and 0 to 25 phr rubber processing oil.

6. The method according to claim 4 characterized in that the cured rubber substrate surface is a cured rubber comprised of at least one of natural rubber, synthetic cis 1,4-polyisoprene, cis 1,4-polybutadiene, styrene/butadiene copolymer, butyl, chlorobutyl bromobutyl and EPDM rubber containing carbon black, zinc oxide, stearate and 0 to 25 phr rubber processing oil.

**Patentansprüche**

1. Verfahren zur Herstellung eines Verbundes aus einem Polyurethan, das mit einer Oberfläche eines vulkanisierten Kautschuksubstrats verbunden ist, gekennzeichnet durch die Stufen

(A) Reinigen einer Oberfläche eines vulkanisierten Kautschuksubstrats, wobei der Kautschuk 0 bis 25 phr Kautschukverarbeitungsöl enthält,

(B) Aufbringen wenigstens eines Überzuges auf die gereinigte Substratoberfläche als Dispersion von Cyanursäure in einem flüchtigen organischen Verdünnungsmittel und Trocknen des erhaltenen Überzugs zur Entfernung des Verdünnungsmittels,

(C) Aufbringen wenigstens eines weiteren Überzugs auf den Cyanursäureüberzug als Lösung eines Phenol/Formaldehyd-Resolharzes in einem flüchtigen organischen Lösungsmittel und Trocknen des erhaltenen zusätzlichen Überzugs zur Entfernung des Lösungsmittels,

(D) Aufbringen einer flüssigen Polyurethanreaktionsmischung auf die beschichtete Substratoberfläche, und

(E) Härten der Reaktionsmischung unter Bildung eines Verbundes aus einem Polyurethan, das mit einem vulkanisierten Kautschuksubstrat über die aufeinfolgend aufgebrachten Überzüge verbunden ist.

2. Verfahren zur Herstellung eines Verbundes in Form eines Reifens, gekennzeichnet durch die Stufen

(A) Herstellung einer kreisförmigen vulkanisierten Kautschukreifenlauffläche aus einem inneren Kautschukteil mit einer exponierten inneren Laufflächen oberfläche, wobei der innere Kautschukteil 0 bis 25 phr Kautschukverarbeitungsöl enthält,

(B) Reinigen der exponierten inneren Oberfläche des inneren Laufflächenteils;

(C) Aufbringen wenigstens eines Überzugs auf die gereinigte innere Laufflächenoberfläche aus einer Dispersion von Cyanursäure in einem flüchtigen organischen Verdünnungsmittel und Trocknen des erhaltenen Überzugs,

(D) Aufbringen wenigstens eines weiteren Überzugs auf den Cyanursäureüberzug als Lösung eines Phenol/Formaldehyd-Resolharzes in einem flüchtigen organischen Lösungsmittel und Trocknen des erhaltenen Überzugs,

(E) Aufbringen einer flüssigen Polyurethanreaktionsmischung auf die beschichtete Oberfläche in einer Form mit der Form einer gewünschten Reifenkarkasse und

(F) Vulkanisieren der Reaktionsmischung in der Form unter Bildung des Verbundes als Polyurethanreifenkarkasse, die mit einer vulkanisierten Kautschuklauffläche über die aufeinanderfolgend aufgebrachten Überzüge verbunden ist.

3. Verfahren zur Herstellung eines Verbundes in Form eines Reifens, gekennzeichnet durch die Stufen

(A) Herstellung einer toroidal geformten vulkanisierten Kautschukreifenkarkasse, wobei die Karkasse einen äusseren umlaufenden exponierten Kautschukteil aufweist, der ungefähr 0 bis 25 phr Kautschukverarbeitungsöl enthält,

(B) Reinigen der äusseren exponierten Oberfläche des äusseren Kautschukteils der Karkasse,

(C) Aufbringen wenigstens eines Überzugs auf die gereinigte äussere Karkassenoberfläche als Dispersion von Cyanursäure in einem flüchtigen organischen Lösungsmittel und Trocknen des erhaltenen Überzugs,

(D) Aufbringen wenigstens eines weiteren Überzugs auf die beschichtete Oberfläche als Lösung eines Phenol/Formaldehyd-Resolharzes in einem organischen Lösungsmittel und Trocknen eines jeden einzelnen Überzugs,

(E) Aufbringen einer flüssigen Polyurethanreaktionsmischung auf die beschichtete Oberfläche der Karkasse in einer Form mit der Form einer gewünschten Reifenlauffläche und

(F) Vulkanisieren der Reaktionsmischung in der Form unter Bildung des Verbundes als Polyurethanlauffläche, die mit einer vulkanisierten Kautschukreifenkarkasse über die aufeinanderfolgend aufgebrachten Überzüge verbunden ist.

4. Verfahren nach Anspruch 2 oder 3, dadurch gekennzeichnet, daß die vulkanisierten Kautschukoberfläche auf eine Temperatur im Bereich von 50°C bis 95°C vor der Aufbringung der Cyanursäuredispersion und der Phenol/Formaldehyd-Resolharzlösung erhitzt wird, wobei jeweils die Dispersion und die Lösung in einer Menge von 2 bis 5 Überzügen aufgebracht werden, und wobei jeder einzelne Dispersions- und Lösungsüberzug vor der Aufbringung eines weiteren Überzugs getrocknet wird.

5. Verfahren nach Anspruch 2 oder 3, dadurch gekennzeichnet, daß die vulkanisierten Kautschuksubstratoberfläche ein vulkanisierter Kautschuk ist aus wenigstens einem der Bestandteile Naturkautschuk, synthetischem cis-1,4-Polyisopren, cis-1,4-Polybutadien, einem Styrol/Butadien-Copolymeren, Butylkautschuk, Chlorbutylkautschuk, Brombutylkautschuk und EPDM-Kautschuk, enthaltend Ruß, Zinkoxid, Stearat und 0 bis 25 phr Kautschukverarbeitungsöl.

6. Verfahren nach Anspruch 4, dadurch gekennzeichnet, daß die vulkanisierte Kautschuksubstratoberfläche ein vulkanisierter Kautschuk ist aus wenigstens einem der Bestandteile Naturkautschuk, synthetischem cis-1,4-Polyisopren, cis-1,4-Polybutadien, einem Styrol/Butadien-Copolymeren, Butylkautschuk, Chlorbutylkautschuk, Brombutylkautschuk und EPDM-Kautschuk, enthaltend Ruß, Zinkoxid, Stearat und 0 bis 25 phr Kautschukverarbeitungsöl.

**Revendications**

1. Procédé de fabrication d'une matière composite constituée d'un polyuréthanne lié à une surface de substrat en caoutchouc vulcanisé, ce procédé étant caractérisé en ce qu'il comprend les étapes consistant à:

(A) nettoyer une surface d'un substrat en caoutchouc vulcanisé dans lequel ledit caoutchouc contient 0 à 25 parties en poids d'huile plastifiante de caoutchouc par cent parties en poids de caoutchouc.

(B) appliquer au moins un revêtement à cette surface de substrat nettoyée, sous forme d'une dispersion d'acide cyanurique dans un diluant organique volatil, et sécher la couche résultante, en vue d'éliminer le diluant.

(C) appliquer au moins une couche protectrice supplémentaire à la couche d'acide cyanurique sous forme d'une solution comprenant une résine de résol au phénol-formaldéhyde, dans un solvant organique volatil, et sécher la couche protectrice supplémentaire résultante, en vue d'éliminer le solvant.

(D) appliquer un mélange réactionnel liquide de polyuréthanne à cette surface de substrat revêtue.

(E) cuire ce mélange réactionnel, pour obtenir une matière composite constituée de polyuréthanne lié à du caoutchouc vulcanisé via des revêtements appliqués successivement.

2. Procédé de préparation d'une matière composite en forme de bandage pneumatique caractérisé en ce que ce procédé comprend les étapes consistant à:

(A) préparer und bande de roulement circulaire en caoutchouc vulcanisé pour bandage pneumatique, cette band de roulement étant constituée d'une portion interne en caoutchouc, munie d'une surface interne dégagée de bande de roulement et d'une portion interne dégagée en caoutchouc, cette portion interne en caoutchouc contenant de 0 à 25 parties en poids d'huile plastifiante de caoutchouc par cent parties en poids de caoutchouc.

(B) nettoyer la surface interne dégagée de la portion interne de la bande de roulement.

(C) appliquer au moins une revêtement à cette surface interne nettoyée de bande de roulement, ce revêtement étant constitué d'une dispersion d'acide cyanurique dans un diluant organique volatil et sécher la couche résultante.

(D) appliquer au moins une couche protectrice supplémentaire à cette couche d'acide cyanurique, sous forme d'une solution constituée d'une résine de résol au phénol formaldéhyde, dans un solvant organique volatil et sécher la couche protectrice résultante.

(E) appliquer un mélange réactionnel liquide de polyuréthanne à cette surface revêtue, dans une infrastructure de moulage ayant la forme d'une carcasse désirée de bandage pneumatique.

(F) cuire ce mélange réactionnel dans l'infrastructure de moulage, afin d'obtenir la matière composite constituée d'une carcasse en polyuréthanne pour bandage pneumatique liée à une bande de roulement en caoutchouc vulcanisé, via les revêtements appliqués successivement.

3. Procédé de préparation d'une matière composite en forme de bandage pneumatique, ce procédé étant caractérisé en ce qu'il comprend les étapes consistant à:

(A) préparer und carcasse de forme toroïdal en caoutchouc vulcanisé pour bandage pneumatique, cette carcasse ayant une portion circonférentielle externe dégagée caoutchouc contenant de 0 à 25 parties en poids d'huile plastifiante de caoutchouc par cent parties en poids de caoutchouc.

(B) nettoyer cette surface externe dégagée de la portion externe en caoutchouc de cette carcasse.

(C) appliquer au moins un revêtement à cette surface nettoyée externe de carcasse, sous forme d'une dispersion d'acide cyanurique dans diluant organique volatil et sécher la couche résultante.

(D) appliquer au moins une couche protectrice supplémentaire à cette surface revêtue, sous forme d'une solution constituée d'une résine de résol au phénol-formaldéhyde, dans un solvant organique et sécher la chaque couche individuelle.

(E) appliquer un mélange réactionnel liquide de polyuréthanne à cette surface revêtue de la carcasse, dans une infrastructure de moulage ayant la forme d'une bande de roulement désirée pour bandage pneumatique.

(F) cuire ce mélange réactionnel dans cette infrastructure de moulage, afin d'obtenir la matière composite sous forme d'une bande de roulement en polyuréthanne liée à une carcasse en caoutchouc vulcanisé pour bandage pneumatique, via les revêtements appliqués successivement.

4. Procédé selon la revendication 2 ou 3 caractérisé en ce que l'on chauffe la surface en caoutchouc vulcanisé à une température comprise dans l'intervalle allant de 50°C à 95°C, avant de procéder à l'application de la dispersion d'acide cyanurique et de la solution de résine de résol au phénol-formaldéhyde, chacune de ces dispersion et solution étant appliquée selon une quantité de 2 à 5 revêtements, tandis que l'on sèche chaque couche individuelle de dispersion et chaque couche individuelle de solution avant d'appliquer un revêtement supplémentaire.

5. Procédé selon la revendication 2 ou 3, caractérisé en ce que la surface du substrat en caoutchouc vulcanisé est un caoutchouc vulcanisé constitué d'au moins un des caoutchoucs ci-après, à savoir, le caoutchouc naturel, le cis-1,4-polyisoprène synthétique, le cis-1,4-polybutadiène, le copolymère de styrène/butadiène, la caoutchouc butyle, le caoutchouc chlorobutyle, le caoutchouc bromobutyle et le caoutchouc EPDM, contenant du noir de carbone, de l'oxyde de zinc, des stéarates et de 0 à 25 parties en poids d'huile plastifiante de caoutchouc par 100 parties en poids de caoutchouc.

6. Procédé selon la revendication 4, caractérisé en ce que la surface du substrat en caoutchouc vulcanisé est un caoutchouc vulcanisé constitué d'au moins un des caoutchoucs ci-après, à savoir, le caoutchouc naturel, le cis-1,4-polyisoprène synthétique, le cis-1,4-polybutadiène, le copolymère de styrène/butadiène, le caoutchouc butyle, chlorobutyle, bromobutyle et la caoutchouc EPDM, contenant du noir de carbone, de l'oxyde de zinc, des stéarates et de 0 à 25 parties en poids d'huile plastifiante de caoutchouc par cent parties en poids de caoutchouc.